# FASCICULE DE BREVET EUROPEEN

(11) **EP 2 432 684 B1**
(45) Date de publication et mention de la délivrance du brevet: **10.07.2013**
(21) Numéro de dépôt: 10728764.1
(22) Date de dépôt: 17.05.2010
(51) Int. Cl.: B64C 5/06, B64C 9/00

(54) **PROCÉDÉ POUR L'AMÉLIORATION DE L'EFFICACITÉ AÉRODYNAMIQUE DE L'EMPENNAGE VERTICAL D'UN AÉRONEF**
VERFAHREN ZUR VERBESSERUNG DER AERODYNAMISCHEN EFFIZIENZ DES VERTIKALEN RUMPFENDES EINES FLUGZEUGS
METHOD FOR ENHANCING THE AERODYNAMIC EFFICIENCY OF THE VERTICAL TAIL OF AN AIRCRAFT

(30) Priorité: 20.05.2009 FR 0902466
(43) Date de publication de la demande: 28.03.2012
(73) Titulaire: Airbus Operations (S.A.S.), 31060 Toulouse (FR)
(72) Inventeur: TANGUY, Alain, F-31300 Toulouse (FR)
(74) Mandataire: Gevers France
(86) Numéro de dépôt international: PCT/FR2010/050943
(87) Numéro de publication internationale: WO 2010/133789

(56) Documents cités:
- EP-A2- 0 887 256
- WO-A1-00/07875
- US-A- 2 356 139

## Description

La présente invention concerne un procédé pour l'amélioration de l'efficacité aérodynamique de l'empennage vertical d'un aéronef, ainsi qu'un empennage vertical mettant un oeuvre un tel procédé, et un aéronef comprenant un tel empennage vertical.

Elle est adaptée à tout type d'aéronef et en particulier aux avions dont les moteurs sont portés par la voilure.

On sait que l'empennage vertical d'un aéronef est apte à engendrer, du fait de sa surface, une portance latérale et une traînée aérodynamique, et qu'il doit assurer audit aéronef la stabilité, la maniabilité et l'équilibrage pour toutes les conditions de vol.

La surface de l'empennage vertical est dimensionnée de façon à pouvoir compenser l'effet de lacet créé à la suite de la panne de l'un des moteurs de l'aéronef, ce qui permet de garantir à l'aéronef une vitesse minimale de contrôle suffisamment faible en cas de panne moteur pour respecter les performances de décollage et d'atterrissage de l'aéronef. Les dimensions de cet empennage vertical sont calculées à faible dérapage de l'aéronef, pour une gouverne de direction présentant, par rapport à la dérive de l'empennage vertical, une position angulaire maximale.

Par ailleurs, on connaît :
- par le document US-2 356 139, un procédé pour améliorer l'efficacité aérodynamique d'un empennage vertical d'aéronef, comportant une dérive et une gouverne de direction apte à pivoter par rapport à cette dérive. Pour ce faire, ladite dérive est élargie par une dérive dorsale additionnelle, la longueur de ladite dérive additionnelle étant plus importante que la hauteur à laquelle elle joint la dérive existante. Le but de cette dérive additionnelle est d'améliorer un coefficient indiquant le couple en lacet produit par l'empennage vertical en entier en fonction de l'angle de lacet de l'aéronef ;
- par le document EP-0 887 256, un empennage vertical d'aéronef comportant notamment une dérive, une gouverne de direction comprenant deux sections, et un spoiler ; et
- par le document WO-00/07875, un empennage vertical d'aéronef, qui est pourvu d'une plaque à son extrémité supérieure.

L'invention vise à augmenter la portance latérale de l'empennage vertical ou à maintenir la même portance latérale tout en diminuant la surface de l'empennage vertical. Pour ce faire, elle propose un procédé permettant d'améliorer l'efficacité aérodynamique locale de l'empennage vertical sur toute la hauteur de l'empennage vertical, c'est-à-dire de rapprocher au plus près la valeur locale du coefficient de portance latérale de la valeur maximale admissible du coefficient de portance latérale au-delà de laquelle il y a décollement de la couche d'air sur la surface de l'empennage vertical.

A cette fin, selon l'invention, le procédé pour l'amélioration de l'efficacité aérodynamique de l'empennage vertical d'un aéronef comportant une dérive et une gouverne de direction apte à pivoter par rapport à ladite dérive autour d'un axe de charnière, est remarquable en ce que l'on fait varier le rapport entre la corde locale de gouverne et la corde locale de dérive suivant la hauteur de l'empennage vertical pour adapter la valeur locale du coefficient de portance latérale appliquée à l'empennage vertical à une valeur maximale admissible, la corde locale de gouverne étant la distance entre le bord de fuite de la gouverne et l'axe de charnière et la corde locale de dérive étant la distance entre l'axe de charnière et le bord d'attaque de la dérive.

Avantageusement, la valeur maximale admissible du coefficient de portance latérale est la valeur au-delà de laquelle, pour un angle donné entre la gouverne de direction et la dérive, un décollement de l'écoulement aérodynamique est observé sur la surface de l'empennage vertical.

En outre, on détermine le rapport variable entre la corde locale de gouverne et la corde locale de dérive en fonction de la valeur locale du coefficient de portance latérale calculée avec un angle de la gouverne de direction, par rapport à la dérive, pour lequel on observe un décollement de l'écoulement aérodynamique sur la surface de l'empennage vertical.

On augmente le rapport entre la corde locale de gouverne et la corde locale de dérive comparativement à un rapport constant corde locale de gouverne corde locale de dérive, à proximité de l'emplanture de l'empennage vertical, et on diminue le rapport constant entre la corde locale de gouverne et la corde locale de dérive comparativement au rapport entre la corde locale de gouverne et la corde locale de dérive, à proximité du saumon de l'empennage vertical.

Dans une première forme de mise en oeuvre, le procédé permet de perfectionner un empennage vertical, de forme générale trapézoïdale, présentant un bord de fuite de la gouverne de direction rectiligne et un axe de charnière et pour lequel le rapport entre la corde locale de gouverne et la corde locale de dérive est constant, le perfectionnement consistant à faire pivoter l'axe de charnière dans une position donnée, d'un angle orienté de façon à augmenter le rapport entre la corde locale de gouverne et la corde locale de dérive à proximité de l'emplanture et à diminuer le rapport entre la corde locale de gouverne et la corde locale de dérive à proximité du saumon.

Dans une deuxième forme de mise en oeuvre, on réalise l'empennage vertical de façon que le rapport entre la corde locale de gouverne et la corde locale de dérive permette une valeur locale du coefficient de portance latérale constante, inférieure ou égale à la valeur maximale admissible, le long de la hauteur de l'empennage vertical, entre l'emplanture et une hauteur donnée de la dérive, et une valeur locale du coefficient de portance latérale décroissante, entre la hauteur donnée de la dérive et le saumon.

Dans cette deuxième forme de mise en oeuvre, le procédé peut perfectionner un empennage vertical de forme générale trapézoïdale et présentant un bord de fuite de la gouverne de direction rectiligne et un axe de charnière pour lequel le rapport entre la corde locale de gouverne et la corde locale de dérive est constant, le perfectionnement consistant à faire pivoter l'axe de charnière dans une position donnée, d'un angle orienté de façon à augmenter le rapport entre la corde locale de gouverne et la corde locale de dérive à proximité de l'emplanture et à diminuer le rapport entre la corde locale de gouverne et la corde locale de dérive à proximité du saumon, et à donner au bord de fuite de la gouverne de direction une forme courbe concave.

De préférence, on fait pivoter la gouverne de direction autour de l'axe de charnière d'un angle compris entre 0 et 45° relativement à la dérive pour déterminer le rapport variable entre la corde locale de gouverne et la corde locale de dérive.

Bien entendu, il résulte de ce qui précède que la présente invention concerne également un empennage vertical qui met en oeuvre le procédé décrit précédemment, et un aéronef qui comporte un tel empennage vertical.
Les figures des dessins annexés feront bien comprendre comment l'invention peut être réalisée. Sur ces figures, des références identiques désignent des éléments semblables.
La figure 1 représente schématiquement la queue du fuselage d'un aéronef avec un empennage vertical de l'état de la technique.
La figure 2 est une vue agrandie en coupe, suivant la ligne II-II de la figure 1, de l'empennage vertical.
La figure 3 représente un graphique traçant l'évolution du rapport A1 entre la valeur locale du coefficient de portance latérale Ky et la valeur constante du coefficient de portance latérale Cy calculé pour une vitesse minimale de contrôle, en fonction de la hauteur, relativement à l'envergure, de l'empennage vertical de la figure 1.
La figure 4 représente un premier mode de réalisation de l'empennage vertical selon l'invention.
La figure 5 représente un graphique traçant l'évolution du rapport A1 en fonction de la hauteur, relativement à l'envergure, de l'empennage vertical de la figure 4.
La figure 6 représente un deuxième mode de réalisation de l'empennage vertical selon l'invention.
La figure 7 représente un graphique traçant l'évolution du rapport A1 suivant la hauteur, relativement à l'envergure, de l'empennage vertical de la figure 6.

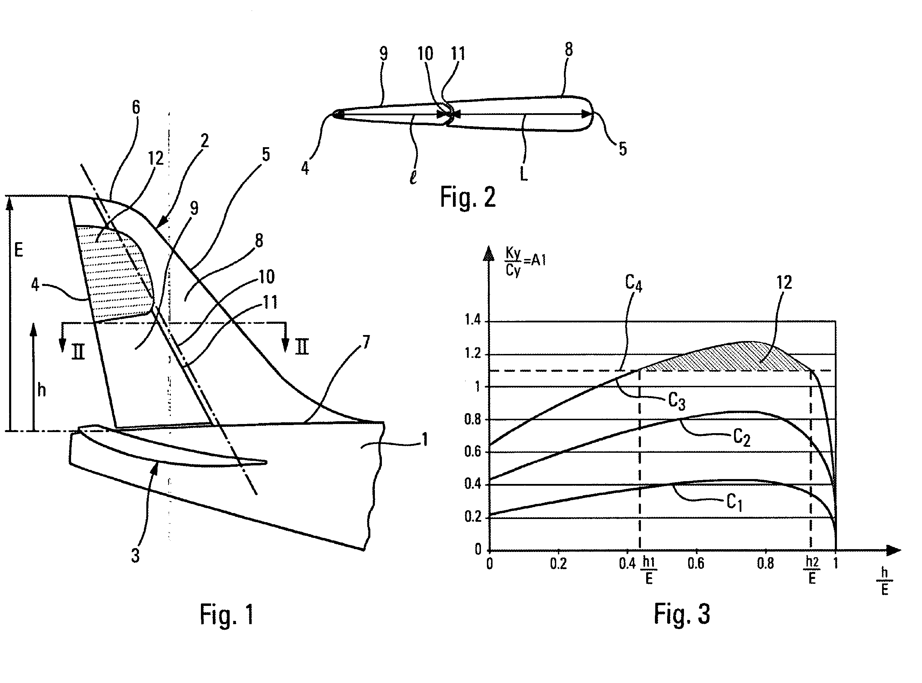

La queue 1 de fuselage d'aéronef, représentée sur les figures 1, 4 et 6, porte un empennage vertical 2 de forme sensiblement trapézoïdale et un empennage horizontal 3.

L'empennage vertical 2 est délimité par un bord de fuite 4, un bord d'attaque 5, une extrémité supérieure ou saumon 6 et une extrémité inférieure ou emplanture 7. L'empennage vertical 2 comporte une dérive 8 et une gouverne de direction 9 articulée sur la dérive 8 par un axe de charnière 10 légèrement en avant des bords d'extrémité arrière 11 de la dérive 8. L'envergure de l'empennage vertical 2 entre le saumon 6 et l'emplanture 7 est désignée par E.

A une hauteur h de l'empennage vertical 2 correspondant à la distance de la ligne II-II à l'emplanture 7, on considère la corde locale de gouverne I qui est la distance entre le bord de fuite 4 et l'axe de charnière 10, et la corde locale de dérive L qui est la distance entre l'axe de charnière 10 et le bord d'attaque 5, comme illustré sur la figure 2.

Dans l'état de la technique décrit sur les figures 1 à 3, le rapport I/L est constant quelle que soit la hauteur h.

Sur le graphique de la figure 3, sont représentées trois courbes C1, C2 et C3 en forme de cloche correspondant chacune à l'évolution du rapport A1 défini ci-avant en fonction de la hauteur h relativement à l'envergure E, pour trois angles différents de la gouverne de direction 9 par rapport à la dérive 8. Une droite C4, horizontale, correspond au rapport A1 maximal au-delà duquel un décollement 12 de l'écoulement de l'air sur l'empennage vertical 2 est observé.

Comme on peut le voir, pour chaque courbe C1, C2 et C3, le rapport A1 augmente jusqu'à une hauteur limite, pour diminuer ensuite jusqu'à devenir nulle à l'envergure E. La hauteur limite est située plus près du saumon 6 que de l'emplanture 7, car l'écoulement de l'air subit le plus de perturbations aérodynamiques sur cette partie de l'empennage vertical 2.

L'angle de la gouverne de direction 9 par rapport à la dérive 8 est de 10°, 20°, 45°, respectivement pour les courbes C1, C2 et C3. Le rapport A1 des trois courbes C1, C2 et C3 est proportionnel à l'angle de la gouverne de direction 9. Ainsi, quelle que soit la hauteur h relativement à l'envergure E, la courbe C3 est au-dessus de la courbe C2 qui est au-dessus de la courbe C1.

La position des deux courbes C1 et C2 en dessous de la droite C4 pour toute hauteur h comprise dans l'intervalle [0, E], illustre que pour les angles 10° et 20°, la portance locale latérale de l'empennage vertical 2 est inférieure à la portance latérale maximale admissible sans décollement de la couche d'air, quelle que soit la hauteur h.

La courbe C3 est en dessous de la droite C4 pour une hauteur h comprise dans les intervalles [0, h1] et [h2, E], et est au-dessus de la droite C4 pour une hauteur h comprise dans l'intervalle [h1, h2].

En d'autres termes, pour l'angle de 45°, la portance locale latérale de l'empennage vertical 2 est :
- inférieure à la portance latérale maximale pour une hauteur h comprise dans les intervalles [0, h1] et [h2, E] ;
- supérieure à la portance latérale maximale pour une hauteur h comprise dans l'intervalle [h1, h2].

Les écarts entre la portance locale latérale de l'empennage vertical 2 et la portance latérale maximale indiquent que le rapport I/L constant dans l'état de la technique, quelle que soit la hauteur h, n'est pas adapté.

L'invention consiste à rendre variable le rapport I/L pour rapprocher le rapport A1 des courbes C1, C2 et C3, désormais désignées C'1, C'2 et C'3, du rapport A1 maximal de la droite C4.

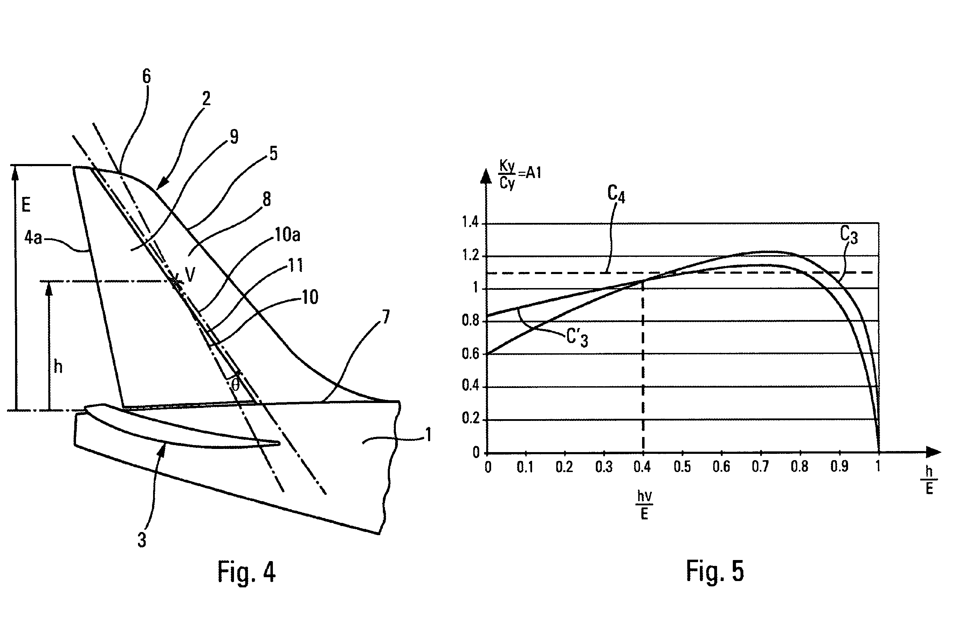

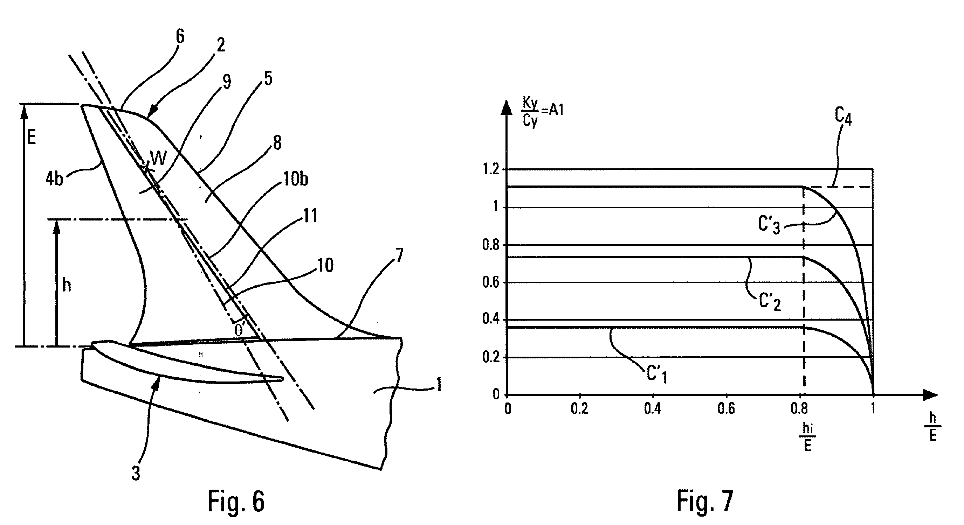

Le rapport I/L variable est déterminé en fonction du rapport A1 calculé pour un angle de la gouverne de direction 9, par rapport à la dérive 8, entraînant un décollement 12, ce qui correspond à la courbe C'3 des figures 5 et 7. Par exemple, cet angle est de 45°.

Un premier mode de réalisation de l'empennage vertical 2 selon l'invention et le graphique traçant l'évolution du rapport A1 de la courbe C'3 en fonction de la hauteur h, relativement à l'envergure E, sont respectivement représentés sur les figures 4 et 5.

Dans ce premier mode de réalisation, le bord de fuite 4a de la gouverne de direction 9 correspond au bord de fuite 4 rectiligne de l'empennage vertical 2 de la figure 1. L'axe de charnière 10a a pivoté autour d'un point V, par rapport à l'axe de charnière 10 de la figure 1, d'un angle θ orienté dans le sens antihoraire.

Le rapport I/L variable est augmenté relativement au rapport I/L constant, à proximité de l'emplanture 7, quelle que soit la hauteur h comprise dans l'intervalle [0, hv], pour permettre d'augmenter le rapport A1 de la courbe C'3, comparativement au rapport A1 de la courbe C3, à proximité de l'emplanture 7. Il est diminué relativement au rapport I/L constant, à proximité du saumon 6, quelle que soit la hauteur h comprise dans l'intervalle [hv, E], pour permettre de diminuer le rapport A1 de la courbe C'3, comparativement au rapport A1 de la courbe C3, à proximité du saumon 6. Il est égal au rapport I/L constant pour hv, le rapport A1 de la courbe C'3 étant égal au rapport A1 de la courbe C3.

Ainsi, la valeur absolue de la différence C'3(h)-A1 maximal est inférieure à la valeur absolue de la différence C3(h)-A1 maximal pour toute hauteur h de l'empennage vertical 2. La valeur locale du coefficient de portance latérale Ky de la courbe C'3 est donc rapprochée de la valeur du coefficient de portance latérale Ky maximal de la droite C4, pour toute hauteur h, la valeur du coefficient de portance latérale Cy étant une constante.

Un deuxième mode de réalisation de l'empennage vertical 2 selon l'invention et le graphique traçant l'évolution du rapport A1 de la courbe C'3 en fonction de la hauteur h, relativement à l'envergure E, sont respectivement représentés sur les figures 6 et 7.

Dans ce deuxième mode de réalisation, le bord de fuite 4b de la gouverne de direction 9 présente une forme courbe concave. Il pourrait présenter une autre forme concave qui ne soit pas courbe. L'axe de charnière 10b est pivoté autour d'un point W, par rapport à l'axe de charnière 10 de la figure 1, d'un angle 'θ' orienté dans le sens antihoraire.

Le rapport variable I/L est déterminé de telle sorte que le rapport A1 de la courbe C'3 soit égal au rapport A1 maximal pour toute hauteur h comprise dans l'intervalle [0, hi], et diminue dans l'intervalle [hi, b].

Les valeurs A1 des courbes C' 1 et C'2, calculées avec le rapport I/L variable déterminé et pour des angles de 10° et 20°, sont deux constantes inférieures au rapport A1 maximal pour une hauteur h comprise dans l'intervalle [0, hi], et diminuent pour une hauteur h comprise dans l'intervalle [hi, E].

Pour chacune des trois courbes C'1, C'2 et C'3, la valeur absolue de la différence C'3(h)-A1 maximal intégrée sur la hauteur h décrivant l'intervalle [0, E], est inférieure à la valeur absolue de la différence C3(h)-A1 maximal intégrée sur la hauteur h décrivant l'intervalle [0, E]. La valeur locale du coefficient de portance latérale Ky des courbes C'1, C'2 et C'3 est donc rapprochée « en moyenne » de la valeur du coefficient de portance latérale Ky maximal de la droite C4, la valeur du coefficient de portance latérale Cy étant une constante.

Le deuxième mode de réalisation a l'avantage de diminuer la taille de l'empennage vertical et donc la traînée qui s'y applique, comparativement au premier mode de réalisation, tout en optimisant le rapprochement entre la valeur locale du coefficient de portance latérale de la valeur maximale admissible.

En variante, il serait possible de modifier le bord d'attaque à la place du bord de fuite, ou de les modifier tous les deux, de façon à rapprocher ou à faire coïncider le rapport A1 de la courbe C'3 et le rapport A1 maximal de la droite C4.

Ainsi, les deux modes de réalisation permettent de rapprocher la valeur locale du coefficient de portance latérale de la valeur maximale admissible du coefficient de portance latérale. De plus, avantageusement, ils permettent de rendre les efforts de flexion dus aux positions angulaires de la gouverne de direction par rapport à la dérive, plus faibles que ceux résultant de la configuration de l'empennage vertical de l'état de la technique, étant donné que la portance latérale appliquée à l'empennage vertical est plus distribuée vers l'emplanture que vers le saumon. Il en résulte des gains de masse importants pour la réalisation de l'empennage vertical de l'aéronef.

## Revendications

1. Procédé pour l'amélioration de l'efficacité aérodynamique d'un empennage vertical (2) d'aéronef comportant une dérive (8) et une gouverne de direction (9) apte à pivoter par rapport à ladite dérive (8) autour d'un axe de charnière (10, 10a, 10b),
**caractérisé en ce que** l'on fait varier le rapport entre la corde locale de gouverne (I) et la corde locale de dérive (L) suivant la hauteur (h) de l'empennage vertical (2) pour rapprocher la valeur locale du coefficient de portance latérale appliquée à l'empennage vertical (2) d'une valeur maximale admissible, la corde locale de gouverne (I) étant la distance entre le bord de fuite (4, 4a, 4b) de la gouverne (9) et l'axe de charnière (10, 10a, 10b) et la corde locale de dérive (L) étant la distance entre l'axe de charnière (10, 10a, 10b) et le bord d'attaque (5) de la dérive (8).

2. Procédé selon la revendication 1,
**caractérisé en ce que** la valeur maximale admissible du coefficient de portance latérale est la valeur au-delà de laquelle, pour un angle donné entre la gouverne de direction (9) et la dérive (8), un décollement (12) de l'écoulement aérodynamique est observé sur la surface de l'empennage vertical (2).

3. Procédé selon l'une des revendications 1 ou 2,
**caractérisé en ce que** l'on détermine le rapport variable entre la corde locale de gouverne (I) et la corde locale de dérive (L) en fonction de la valeur locale du coefficient de portance latérale calculée avec un angle de la gouverne de direction (9) par rapport à la dérive (8) pour lequel on observe un décollement de l'écoulement aérodynamique sur la surface de l'empennage vertical (2).

4. Procédé selon la revendication 3,
**caractérisé en ce que** l'on, augmente le rapport entre la corde locale de gouverne (I) et la corde locale de dérive (L) comparativement à un rapport constant corde locale de gouverne (I) / corde locale de dérive (L), à proximité de l'emplanture (7) de l'empennage vertical (2), et **en ce que** l'on diminue le rapport entre la corde locale de gouverne (I) et la corde locale de dérive (L) comparativement au rapport constant entre la corde locale de gouverne (I) et la corde locale de dérive (L), à proximité du saumon (6) de l'empennage vertical (2).

5. Procédé selon la revendication 4, appliqué à un empennage vertical (2) de forme générale trapézoïdale présentant un bord de fuite (4) de la gouverne de direction (9) rectiligne et un axe de charnière (10) et pour lequel le rapport entre la corde locale de gouverne (I) et la corde locale de dérive (L) est constant,
**caractérisé en ce que** l'axe de charnière (10) est pivoté dans une position donnée (10a), d'un angle (θ) orienté de façon à augmenter le rapport entre la corde locale de gouverne (I) et la corde locale de dérive (L) à proximité de l'emplanture (7) et à diminuer le rapport entre la corde locale de gouverne (I) et la corde locale de dérive (L) à proximité du saumon (6).

6. Procédé selon la revendication 4,
**caractérisé en ce que** l'on réalise l'empennage vertical (2) de façon à ce que le rapport entre la corde locale de gouverne (I) et la corde locale de dérive (L) permette une valeur locale du coefficient de portance latérale constante, inférieure ou égale à la valeur maximale admissible, le long de la hauteur de l'empennage vertical (2), entre l'emplanture (7) et une hauteur donnée de la dérive (8), et une valeur locale du coefficient de portance latérale décroissante, entre la hauteur donnée de la dérive (8) et le saumon (6).

7. Procédé selon la revendication 6, appliqué à un empennage vertical (2) de forme générale trapézoïdale présentant un bord de fuite (4) de la gouverne de direction (9) rectiligne et un axe de charnière (10) et pour lequel le rapport entre la corde locale de gouverne (I) et la corde locale de dérive (L) est constant,
**caractérisé en ce que** le bord de fuite (4) de la gouverne de direction (9) est agencé de façon à présenter une forme courbée concave (4b) et **en ce que** l'axe de charnière (10) est pivoté dans une position donnée (10b), d'un angle (θ') orienté de façon à augmenter le rapport entre la corde locale de gouverne (I) et la corde locale de dérive (L) à proximité de l'emplanture (7) et à diminuer le rapport entre la corde locale de gouverne (I) et la corde locale de dérive (L) à proximité du saumon (6).

8. Procédé selon l'une des revendications 1 à 7,
**caractérisé en ce que** l'on fait pivoter la gouverne de direction (9) autour de l'axe de charnière (10, 10a, 10b) d'un angle compris entre 0 et 45° relativement à la dérive (8).

9. Empennage vertical (2) d'aéronef comportant une dérive (8) et une gouverne de direction (9) apte à pivoter par rapport à ladite dérive (8) autour d'un axe de charnière (10, 10a, 10b),
**caractérisé en ce que** ladite gouverne de direction (9) et ladite dérive (8) présentent des cordes locales (I,L), dont le rapport est variable suivant la hauteur (h) de l'empennage vertical (2) pour rapprocher la valeur locale du coefficient de portance latérale appliquée à l'empennage vertical (2) d'une valeur maximale admissible, la corde locale (I) de la gouverne (9) étant la distance entre le bord de fuite (4, 4a, 4b) de la gouverne (9) et l'axe de charnière (10, 10a, 10b) et la corde locale (L) de la dérive (8) étant la distance entre l'axe de charnière (10, 10a, 10b) et le bord d'attaque (5) de la dérive (8).

10. Aéronef (1),
**caractérisé en ce qu'**il comporte un empennage vertical (2) selon la revendication 9.

## Patentansprüche

1. Verfahren zum Verbessern der aerodynamischen Effizienz eines Seitenleitwerks (2) eines Flugzeugs, das eine Flosse (8) und ein Ruder (9) aufweist, das relativ zu der Flosse (8) um eine Scharnierachse (10, 10a, 10b) schwenkbar ist,
**dadurch gekennzeichnet, dass** das Verhältnis zwischen der lokalen Rudersehne (I) und der lokalen Flossensehne (L) in der Höhe (h) des Seitenwerks (2) variiert wird, um den lokalen Wert des Koeffizienten des Seitenauftriebs, der auf das Seitenleitwerk (2) ausgeübt wird, einem zulässigen Höchstwert anzunähern, wobei die lokale Rudersehne (I) der Abstand zwischen der Hinterkante (4, 4a, 4b) des Ruders (9) und der Scharnierachse (10, 10a, 10b) ist und die lokale Flossensehne (L) der Abstand zwischen der Scharnierachse (10, 10a, 10b) und der Vorderkante (5) der Flosse (8) ist.

2. Verfahren nach Anspruch 1,
**dadurch gekennzeichnet, dass** der zulässige Höchstwert des Seitenauftriebs-Koeffizienten der Wert ist, oberhalb dessen, bei einem gegebenen Winkel zwischen dem Ruder (9) und der Flosse (8), ein Abriss (12) der aerodynamischen Strömung auf der Oberfläche des Seitenleitwerks (2) zu beobachten ist.

3. Verfahren nach einem der Ansprüche 1 oder 2,
**dadurch gekennzeichnet, dass** das variable Verhältnis zwischen der lokalen Rudersehne (I) und der lokalen Flossensehne (L) in Abhängigkeit des lokalen Werts des Seitenauftriebs-Koeffizienten bestimmt wird, der bei einem Winkel des Ruders (9) relativ zu der Flosse (8) berechnet wird, bei dem ein Abriss der aerodymamischen Strömung auf der Oberfläche des Seitenleitwerks (2) zu beobachten ist.

4. Verfahren nach Anspruch 3,
**dadurch gekennzeichnet, dass** das Verhältnis zwischen der lokalen Rudersehne (I) und der lokalen Flossensehne (L) im Vergleich zu einem konstanten Verhältnis zwischen der lokalen Rudersehne (I)/der lokalen Flossensehne (L), in der Nähe der Wurzel (7) des Seitenleitwerks (2), erhöht wird und dass das Verhältnis zwischen der lokalen Rudersehne (I) und der lokalen Flossensehne (L) im Vergleich zu dem konstanten Verhältnis zwischen der lokalen Rudersehne (I) und der lokalen Flossensehne (L), in der Nähe der Spitze (6) des Seitenleitwerks (2), vermindert wird.

5. Verfahren nach Anspruch 4, das auf ein allgemein trapezförmiges Seitenleitwerk (2) angewendet wird, das eine Hinterkante (4) des geraden Ruders (9) und eine Scharnierachse (10) aufweist, und bei dem das Verhältnis zwischen der lokalen Rudersehne (I) und der lokalen Flossensehne (L) konstant ist,
**dadurch gekennzeichnet, dass** die Scharnierachse (10) in eine gegebene Position (10a) um einen Winkel (θ) geschwenkt wird, der derart ausgerichtet ist, dass er das Verhältnis zwischen der lokalen Rudersehne (I) und der lokalen Flossensehne (L) in der Nähe der Wurzel (7) erhöht und das Verhältnis zwischen der lokalen Rudersehne (I) und der lokalen Flossensehne (L) in der Nähe der Spitze (6) vermindert.

6. Verfahren nach Anspruch 4,
**dadurch gekennzeichnet, dass** das Seitenleitwerk (2) derart realisiert wird, dass das Verhältnis zwischen der lokalen Rudersehne (I) und der lokalen Flossensehne (L) einen lokalen Wert des Seitenauftriebs-Koeffizienten zulässt, der, entlang der Höhe des Seitenleitwerks (2), zwischen der Wurzel (7) und einer gegebenen Höhe der Flosse (8), konstant und kleiner oder gleich dem zulässigen Höchstwert ist, und einen lokalen Wert des Seitenauftriebs-Koeffizienten zulässt, der, zwischen der gegebenen Höhe der Flosse (8) und der Spitze (6), abnimmt.

7. Verfahren nach Anspruch 6, das auf ein allgemein trapezförmiges Seitenleitwerk (2) angewendet wird, das eine gerade Hinterkante (4) des Ruders (9) und eine Scharnierachse (10) aufweist, und bei dem das Verhältnis zwischen der lokalen Rudersehne (I) und der lokalen Flossensehne (L) konstant ist,
**dadurch gekennzeichnet, dass** die Hinterkante (4) des Ruders (9) derart ausgebildet ist, dass sie eine konkave gekrümmte Form (4b) aufweist, und dass die Scharnierachse (10) in eine gegebene Position (10b) um einen Winkel (θ') geschwenkt wird, der derart ausgerichtet ist, dass er das Verhältnis zwischen der lokalen Rudersehne (I) und der lokalen Flossensehne (L) in der Nähe der Wurzel (7) erhöht und das Verhältnis zwischen der lokalen Rudersehne (I) und der lokalen Flossensehne (L) in der Nähe der Spitze (6) vermindert.

8. Verfahren nach einem der Ansprüche 1 bis 7,
**dadurch gekennzeichnet, dass** das Ruder (9) um die Scharnierachse (10, 10a, 10b) herum um einen Winkel geschwenkt wird, der bezogen auf die Flosse (8) zwischen 0 und 45° beträgt.

9. Flugzeug-Seitenleitwerk (2), das eine Flosse (8) und ein Ruder (9) aufweist, das relativ zu der Flosse (8) um eine Scharnierachse (10, 10a, 10b) schwenkbar ist,
**dadurch gekennzeichnet, dass** das Ruder (9) und die Flosse (8) lokale Sehnen (I, L) aufweisen, deren Verhältnis in der Höhe (h) des Seitenleitwerks (2) variabel ist, um den lokalen Wert des Koeffizienten des Seitenauftriebs, der auf das Seitenleitwerk (2) ausgeübt wird, einem zulässigen Höchstwert anzunähern, wobei die lokale Sehne (I) des Ruders (9) der Abstand zwischen der Hinterkante (4, 4a, 4b) des Ruders (9) und der Scharnierachse (10, 10a, 10b) ist und die lokale Sehne (L) der Flosse (8) der Abstand zwischen der Scharnierachse (10, 10a, 10b) und der Vorderkante (5) der Flosse (8) ist.

10. Flugzeug (1),
**dadurch gekennzeichnet, dass** es ein Seitenleitwerk (2) nach Anspruch 9 aufweist.

## Claims

1. A method for enhancing the aerodynamic efficiency of a vertical tail (2) of an aircraft comprising a vertical stabilizer (8) and a control surface (9) able to pivot with respect to said vertical stabilizer (8) around a hinge axis (10, 10a, 10b),
**characterized in that** the ratio between the control surface
local chord (I) and the vertical stabilizer local chord (L) is varied as a function of the height (h) of the vertical tail (2) so as to bring the local value of the side lift coefficient applied to the vertical tail (2) closer to a maximum acceptable value, the control surface local chord (I) being the distance between the trailing edge (4, 4a, 4b) of the control surface (9) and the hinge axis (10, 10a, 10b) and the vertical stabilizer local chord (L) being the distance between the hinge axis (10, 10a, 10b) and the leading edge (5) of the vertical stabilizer (8).

2. The method according to claim 1,
**characterized in that** the maximum acceptable value of the
side lift coefficient is the value beyond which, for a given angle between the control surface (9) and the vertical stabilizer (8), a detachment (12) of the aerodynamic flow is observed on the surface of the vertical tail (2).

3. The method according to any of claims 1 or 2, **characterized in that** the varying ratio is determined
between the control surface local chord (I) and the vertical stabilizer local chord (L) as a function of the local value of the side lift coefficient calculated with an angle of the control surface (9) with respect to the vertical stabilizer (8) for which a detachment is observed of the aerodynamic flow on the surface of the vertical tail (2).

4. The method according to claim 3,
**characterized in that** the ratio between the control surface
local chord (I) and the vertical stabilizer local chord (L) is increased comparatively to a constant ratio between the control surface local chord (I) and the vertical stabilizer local chord (L), in the vicinity of the root (7) of the vertical tail (2), and **in that** the ratio between the control surface local chord (I) and the vertical stabilizer local chord (L) is decreased comparatively to the constant ratio between the control surface local chord (I) and the vertical stabilizer local chord (L), in the vicinity of the tip (6) of the vertical tail (2).

5. The method according to claim 4, applied to a generally trapezoid-shaped vertical tail (2) having a rectilinear trailing edge (4) of the control surface (9) and a hinge axis (10) and for which the ratio between the control surface local chord (I) and the vertical stabilizer local chord (L) is constant, **characterized in that** the hinge axis (10) is pivoted in
a given position (10a), by an angle (θ) oriented so as to increase the ratio between the control surface local chord (I) and the vertical stabilizer local chord (L) in the vicinity of the root (7) and to decrease the ratio between the control surface local chord (I) and the vertical stabilizer local chord (L) in the vicinity of the tip (6).

6. The method according to claim 4,
**characterized in that** the vertical tail (2) is achieved
so that the ratio between the control surface local chord (I) and the vertical stabilizer local chord (L) allows a local value of the side lift coefficient being either constant, lower than or equal to the maximum acceptable value, along the height of the vertical tail (2), between the root (7) and a given height of the vertical stabilizer (8), and a decreasing local value of the side lift coefficient between the given height of the vertical stabilizer (8) and the tip (6).

7. The method according to claim 6, applied to a generally trapezoid-shaped vertical tail (2) having a rectilinear trailing edge (4) of the control surface (9) and a hinge axis (10) and for which the ratio between the control surface local chord (I) and the vertical stabilizer local chord (L) is constant, **characterized in that** the trailing edge (4) of the control
surface (9) is arranged so as to have a concave curved shape (4b) and **in that** the hinge axis (10) is pivoted in a given position (10b), by an angle (θ') oriented so as to increase the ratio between the control surface local chord (I) and the vertical stabilizer local chord (L) in the vicinity of the root (7) and to decrease the ratio between the control surface local chord (I) and the vertical stabilizer local chord (L) in the vicinity of the tip (6).

8. The method according to any of claims 1 to 7, **characterized in that** the control surface (9) is pivoted
around the hinge axis (10, 10a, 10b) by an angle ranging between 0 and 45° relatively to the vertical stabilizer (8).

9. Avertical tail (2) of an aircraft comprising a vertical stabilizer (8) and a control surface (9) able to pivot with respect to said vertical stabilizer (8) around a hinge axis (10, 10a, 10b),
**characterized in that** said control surface (9) and said
vertical stabilizer (8) have local chords, the ratio of them being varied as a function of the height (h) of the vertical tail (2) so as to bring the local value of the side lift coefficient applied to the vertical tail (2) closer to a maximum acceptable value, the control surface local chord (I) being the distance between the trailing edge (4, 4a, 4b) of the control surface (9) and the hinge axis (10, 10a, 10b) and the vertical stabilizer local chord (L) being the distance between the hinge axis (10, 10a, 10b) and the leading edge (5) of the vertical stabilizer (8).

10. An aircraft (1),
**characterized in that** it comprises a vertical tail (2)
according to claim 9.
